# EUROPEAN PATENT SPECIFICATION

(11) **EP 2 052 810 B1**
(45) Date of publication and mention of the grant of the patent: **01.12.2010**
(21) Application number: 07118993.0
(22) Date of filing: 22.10.2007
(51) Int. Cl.: B23Q 17/09, B21D 22/18

(54) **Tool holder and incremental sheet forming method using the same**
Werkzeughalter und Verfahren zur Erzeugung einer inkrementellen Folie damit
Porte-outil et procédé de formation de feuille incrémentielle l'utilisant

(43) Date of publication of application: 29.04.2009
(73) Proprietor: EADS Deutschland GmbH, 85521 Ottobrunn (DE); Fraunhofer-Gesellschaft zur Förderung der angewandten Forschung e.V., 80686 München (DE)
(72) Inventor: Brunner, Bernhard, Dr., 97250 Erlabrunn (DE); Merk, Johannes, 97209 Veitshöchheim (DE); Biehl, Saskia, 38100 Braunschweig (DE); Zettler, Joachim, 81927 München (DE)
(74) Representative: Kastel, Stefan

(56) References cited:
- EP-A- 0 151 976
- EP-A- 0 203 490
- WO-A-2006/110962
- DE-A1- 2 906 892
- US-A- 3 602 090
- US-A- 4 733 049

## Description

The invention relates to a tool holder comprising a first sensing device for detecting an axial force. Further, the invention relates to an incremental sheet forming method using such tool holder.

Incremental sheet forming (or ISF) is a sheet metal forming technique where a sheet is formed into the final workpiece by a series of small incremental deformations. In most applications, sheet metal is formed by a round tipped tool. Such tools typically have a diameter of 5 to 20 mm. A tool can be attached to a CNC machine, a robot arm or any similar machinery by an appropriate tool holder. The machinery moves the attached tool such that it indents into the sheet by a small distance, for example by about 1 mm, and than follows a contour for the desired part. The tool than indents further and draws the next contour for the part into the sheet and continues to do this until the full part is formed.

Detailed explanations of present incremental sheet forming methods can be found in J. Allwood, K.Jackson, "An Introduction to Incremental Sheet Forming" in Cambridge, Institute for Manufacturing, University of Cambridge, papers of CMI workshop on sandwich sheets, June 21, 2005 and K.Jackson - incremental sheet forming - power point presentation of December 01, 2005. Both presentations were available in Internet during September 2007 and show the Cambridge machine for incremental sheet forming. In this machine, the total tool force vector is measured by mounting the workpiece on six 10kN load cells to avoid moment loads or overconstraints.

Further explanations of the Incremental Sheet Forming method is given in WO 2006/110962 A1.

In the field of metalworking, it is known to equip tool holders with sensors.

US 4 890 360 A discloses a tool holder for monitoring the service time of a tool held on the tool holder. A sensor and electric circuit are provided for determining whether or not machining operation of the tool is executed. The sensor is an acceleration sensor for detecting acceleration along a normal direction R (centrifugal force).

US 4 671 147 A discloses an instrumental tool holder wherein a force sensor is imbedded in a cutting insert.

A tool holder having an axial force sensor enabling the measurement of an axial force working on a tool directly from a tool side is known from JP 620 546 52 AA.

DE 29 068 92 A1 discloses a tool to be used with a tool holder. One sensor is attached to an end surface of the tool for measuring actual forces. Further sensors are attached to side surfaces of the tool for measuring radial forces. Thus, DE 29 068 92 A1 discloses a tool comprising a first sensing device for detecting an actual force and a second sensing device for detecting a lateral force.

US 3 602 090 A discloses a milling machine control system and a milling force sensor therefore. The milling machine has a tool holder in form of a spindle. A plurality of transducers is disposed about the periphery of a portion of the machine spindle for measuring a lateral deflection of the spindle to measure lateral forces. Further transducers are provided for measuring actual distances relative to a large diameter extension of the spindle to measure an actual force. Hence, US 3 602 090 discloses a tool holder and a first sensing device for detecting an actual force as well as a second sensing device for detecting a lateral force, according to the preamble of claim 1.

The object of the invention is to provide a tool holder, especially for holding tools in incremental sheet forming processes, but generally usable also in other metal working processes and also in robotics, wherein the tool holder enables measurement of working forces in such way that any loads or overconstraints on the tool or the workpiece can be measured in a simple and universal way so that different metal working processes can be controlled and, hence optimized.

For achieving such object, the invention provides a tool holder having the features of enclosed claim 1.

An incremental sheet forming method using such a tool holder is object of the further independent claim.

Advantageous embodiments of the invention form the subject matter of the dependent claims.

The invention provides a tool holder comprising a first sensing device for detecting an axial force and further a second sensing device for detecting at least one lateral force.

Hence, the working forces can be measured in a main working direction.Especially, forces in the direction of the main axis through the tool (e.g. the z-axis) can be measured by the first sensing device. According to the invention, there is also provided a second sensing device for measuring lateral forces.

In recent time, researches at the Fraunhofer Institute for Surface Engineering and Thin Films IST in Braunschweig have developed a sensor which can continuously monitor axial forces on the metal working tool. For example, the sensor is mainly formed of a layer of carbon which is applied to a thin metal disc. If the pressure in such a carbon coating increases, its electrical resistance sinks. Especially, a thin layer of a diamond-like carbon can be fabricated with high wear resistance and high hardness. Unlike well-known strain gauges and common piezoresistive sensors, which detect a deformation of the base substrate, this novel sensor can be used in a complete stiff arrangement without any elastic joint. The sensor films can be fabricated directly on load relevant parts of an actuator and enable therefore self-steering adaptronic systems.

Accordingly, it is preferred to use piezoresistive layers within the first sensing device for detecting the axial force. Such a piezoresistive layer is preferably made from an amorphous diamond-like carbon film. Such carbon films are well known for their excellent tribological properties. Especially nano-structured amorphous carbon films show an impressive piezoresistive effect which can be used for load measurement. Thus, high system stiffness and a direct measurement within the force flow between the machine and the tool tip can be achieved. Prefabricated force sensors that are equipped with such films and that can be used for establishing the first sensing device are available from Fraunhofer Institute IST under the trade name "DiaForce®".

Further details and features of the diamond-like carbon films that can be used to form the sensing elements of the first sensing device are disclosed in DE 10253178 B4 and in EP 1057586 B1. One big advantage of such sensor is that the force can be measured in a stiff environment and with nearly zero displacement of the load tip in axial direction. Hence, the position of the tool tip remains well defined which is big advantage in computer controlled metal working processes, such as ISF, and in robotics. Moreover, also very high loads can be transferred by and via such force sensors so that the force sensor can be located within the load transfer route or power train and also as intermediary part of the power train.

One of the ideas of the invention is a combination of several, preferably different, sensors for measuring of distances or displacements and/or of forces in a specially designed tool holder, for measuring lateral and axial forces on the tool tip during the working on the workpiece. For example, a machine tool or any further machinery for conducting the working process or a robot can be controlled in response to the measured lateral and axial forces.

In preferred embodiments, a DiaForce® sensor, developed from Fraunhofer IST and available as thin disc sensor, bears the axial forces directed parallel to the extension of the tool. Distance sensors and/or or displacement sensors as available on the market - for example eddy current sensors, capacitive displacement sensors, inductive displacement sensors, strain gauges, and/or optical sensors - detect changes in a distance between excentric portions of two laterally protruding elements. Preferably, the laterally elements are designed in the form of disc like plates arranged in parallel to each other and, further preferred, extending perpendicularly to the axial direction in an unloaded state. The distance between the laterally protruding elements changes when lateral forces act on the tool. More generally, the second sensor device detects an amount of tilting of the tool holder. With a plurality of circumferentially spaced apart displacement sensors, also the direction of tilting can be detected. Alternatively or additionally to such commercial available distance or displacement sensors, a plurality of DiaForce® sensors (piezoresistive layers of amorphous diamond-like carbon) can be used. Modifications of mechanically mounting parts may be necessary for adaptation of the plurality of DiaForce® sensors.

The tool holder is preferably designed so that it can be fastened to several different machineries. For example, a universal flange connection is provided. This enables to use the tool holder not only in cold working processes, such as incremental sheet forming, but also in other machine tools, such as milling machines, drilling machines, lathes or the like. Further, the tool holder can be used in robotics to control the movement of a tool in response to the loads. A universal smart tool holder according to invention enables, in any such use, measurement of loads acting on the tool, and/or the workpiece during the working process.

In the following, preferred embodiments of the invention are described in detail with reference to the enclosed drawings, wherein
- Fig. 1: is a perspective view showing a smart tool holder in an assembled state;
- Fig. 2: is a perspective exploded view showing the components of the smart tool holder of Fig. 1;
- Fig. 3: is an enlarged perspective view showing of an intermediary part of the tool holder with adhesive bonded strain gauges and displacement sensors for measuring axial directed forces and lateral forces, respectively;
- Fig. 4: is a schematic view of a robot to which the tool holder can be attached, for example for performing an incremental sheet forming process;
- Fig. 5: is a schematic front view of the tool holder in the axial direction wherein the circumferential position of four displacement sensors is illustrated;
- Fig. 6: is a perspective exploded view of a further embodiment of an intermediary part of a tool holder according to the invention; and
- Fig. 7: is an enlarged side view of a second sensing device used in the tool holder according to Fig. 6, in an assembled state.

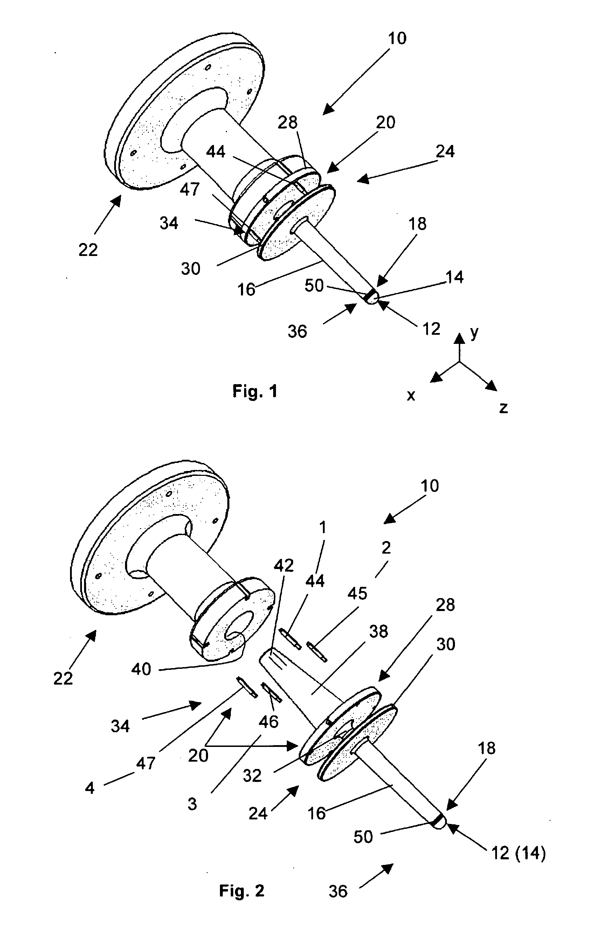

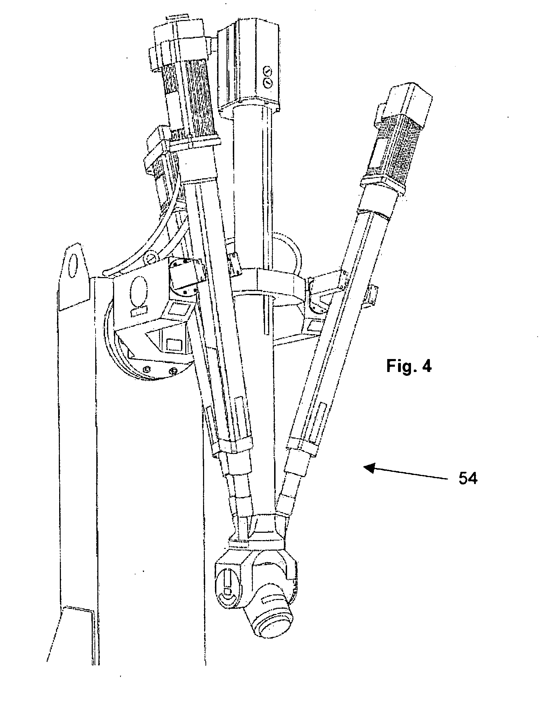

Referring to Figs. 1 to 3, there is shown a first embodiment of a tool holder 10 for mounting a tool 12 to a machinery (for example a robot 54 as shown in Fig. 4) for conducting an Incremental Sheet Forming. The tool 12 is mainly formed by a rounded tip 14 of a die 16.

As shown in Fig. 1, the tool holder 10 comprises a first sensing device 18 for sensing axial forces directed in the main axis of the die 16 and the tool holder 10 (z-axis).

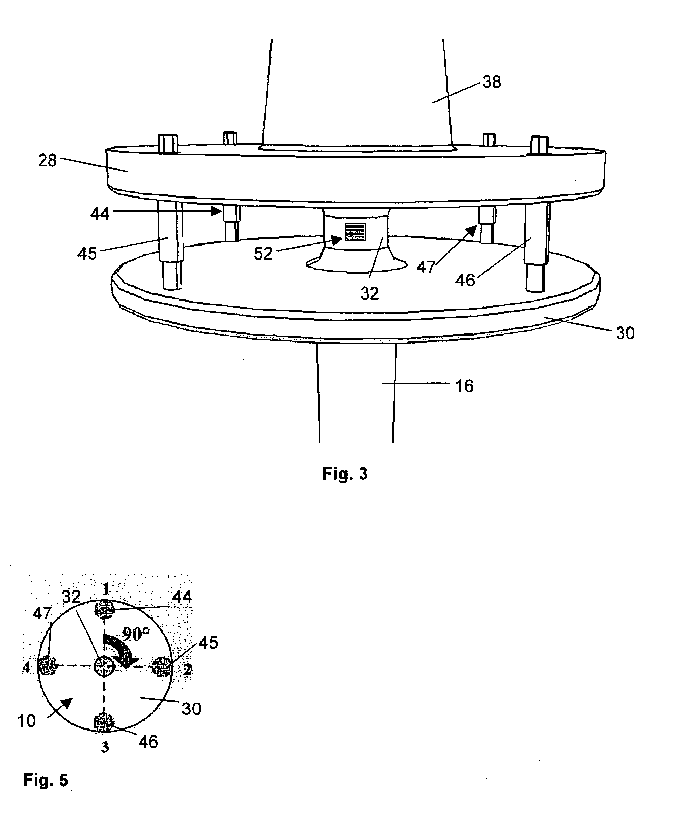

Further, the tool holder 10 comprises a second sensing device 20 the components of which are shown in more detail in Figs. 2 and 3. The second sensing device 20 is adapted to measure lateral forces on the tip 14 of the die 16 in any lateral direction perpendicular to the axial direction (x-direction and y-direction).

Referring now to Fig. 2, there are shown the main components of the tool holder 10. The tool holder 10 includes a flange interface 22 for connection of the tool holder 10 to the robot 54 or to a milling machine (both not shown in Figs. 1 to 3), an intermediary part 24, and an adjusting screw (not shown). The intermediary part 24 connects the tool 12 to the flange interface 22 and comprises the die 16 and the second sensing device 20.

The smart tool holder 10 for the incremental sheet forming process is designed both to form a metal blank and to measure the active forming forces and includes the whole sensor technology for the survey of the force components by measuring the mechanical deviation of the tool 12. The lateral components (e.g. x- and y- components) of the force vector act on the tool tip 14 by causing a deflection of the whole die 16, particularly by deflection of the intermediary part 24. The die 16 is mounted to the flange interface 22 (see figure 1) by a special joint, which includes first and second laterally protruding elements, here in form of two plates 28, 29 for the mounting of at least three sensors 1-4 being the main components of the second sensing device 20. In the shown embodiment, the second sensing device comprises four sensors 1, 2, 3, and 4.

The first laterally protruding element is formed by a reference plate 28. The second laterally protruding element is formed by a measuring plate 30. Sandwiched between the reference and the measuring plates 28, 30 is a deflecting portion, here in form of a rod 32 separating the two plates 28, 30.The rod 32 has a significantly reduced stiffness (see Figs. 2 and 3).

In the first embodiment, as shown in Figs. 1-3, the second sensing device 20 has an eddy current sensor system 34, which detects the changing distance between the plates 28, 30.

An external electronic or a software module (not shown) convert the incoming data into a force value by calculating the actual elongation with the material characteristics.

The axial force component is measured in another way without changing the distance between the two plates 28, 30. The so caused stress in the tool 12 is measured by the first sensing device 18, including a piezoresistive sensor system 36, which is integrated between the die 16 and the exchangeable tool tip 14 (see Fig. 4), and/or a plurality of strain gauges 52 applied to a weakened area. In the embodiment of Fig. 1 to 3, the first sensing device comprises both the piezoresistive sensor system 36 and the strain gauges 52 that are applied to the rod 32, see Fig. 3.

The intermediary part 24 is tightened with its conical fixing by the adjusting screw in a clamping receipt 40 and is assured against twisting by a milled characteristics 42 at the end of the conus 38 and inside the clamping (see Fig. 4). Thereby, the tool 12 is tightened to the flange interface.

Therefore, it is possible to create an interface 22 with high flexibility in mounting to common milling machines or other machine tools integrated into the ISF-process. It is, for example, possible to provide a set of different interfaces 22 with different flanges or other connection structures for adaptation to different machineries.

In the following, measurements with the tool holder 10 integrated into a robot 54 adapted to perform ISF processes will be described in detail.

The tool holder 10 includes the manufactured tool, four eddy current displacement sensors 44 - 47 used as sensors 1-4 of the second sensing device 20 for measuring amount and direction of lateral forces (x - y - plane), DiaForce® sensors 50 and strain gauges 52 for measuring the z-forces.

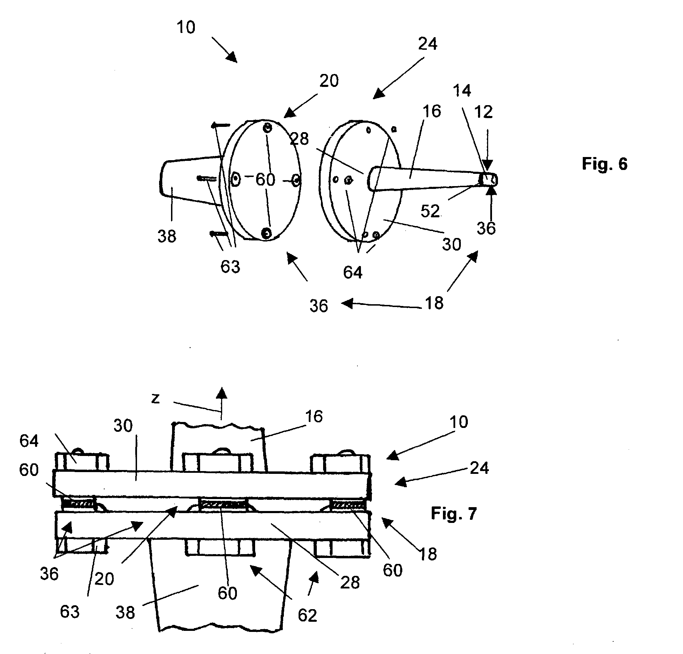

At first, the sensors 44 - 52 are mounted into the smart toll holder 10. The detailed arrangement of the sensors 44 - 52 is visible from Figs. 1, 2, 3, and 5. Therefore, eddy-current displacement sensor 44 - 48, forming the sensors 1-4, are circumferentially spaced apart by angles of about 90° to measure the displacement between the two plates 28, 30 at radially outermost portions thereof in four areas. Two displacement sensors 44 and 46 are positioned on the y-axis, and two displacement sensors 45 and 47 are positioned on the x-axis, see figure 6. The DiaForce® sensor 50 is arranged between the exchangeable tool tip 14 and the die 16. Additionally, the strain gauges 52 are adhesive at bounded to the rod 32, as visible from figure 3. The strain gauges 52 are also part of the first sensing device 18 for measuring axial forces.

The tool with the integrated sensors 44 - 52 is mounted onto a 6-axis-asimultaneous robot 54. An example of such robot 54 is illustrated in Figs. 5.

As shown in figure 5, the four eddy-current displacement sensors 44-47 are circumferentially spaced apart by 90°. Hence, tilting or deflection of the rod 32 in any lateral direction can be measured.

In the following, it is assumed that a downwardly directed vertical force acts on the tip 14. Due to the bending of the die 16, more specifically of the rod 32 that is formed integrally with the die 16, the upper sensor 1 - first eddy current displacement sensor 44 - detects then a wider distance of the measurement plate 30 to the target surface of the reference plate 28, the bottom sensor 3 - third eddy current displacement sensor 46 - detects a smaller distance to the target surface of the reference plate 28, and the two lateral sensors 2 and 4 - second and fourth eddy current sensor 45, 47 - remain at their status quo.

Thus, lateral forces ranging at least in magnitudes from 10° to 10³ can be exactly measured by the eddy current sensor system 34.

Tests with a prototype of the tool holder having the eddy-current sensor system 34 lead to the conclusion, that all the eddy current displacement sensors 44 - 47 have a linear range or linear characteristic and are able to measure all lateral forces that can be awaited in ISF processes or similar applications.

In conclusion, the results of each eddy current displacement sensor 44 - 47 are repeatable and exhibit a specific load-to-output-voltage-relationship so that a look-up table or a mathematical model of the sensor's behaviour in case of a load would lead to an adequately precise force translation.

In the following, measurements of axial forces using the piezoresistive DiaForce® sensor is described.

As illustrated in Figs. 1 and 3, the tool holder 10 is equipped with two sensor principles - strain gauges 52 and the new DiaForce® sensor 50 - for measuring of axial forces.

During practical use, the robot 54 presses, by generating steps of movement, the mounted tool 12 onto a workpiece and causes a strain inside the tool 12. In tests and for calibrating purposes, the axial forces can be measured as a reference by a load cell (not shown), located between the tool tip 14 and a base plate.

The strain gauges 50 are glued on the surface of the tool holder 10 and the DiaForce® sensor 50 is tightened between the die 16 and the exchangeable tip 14.

Most reliable results of the measurement of the strain gauges 52 are to be expected by arrangement of the strain gauges 52 on the most flexible portion of the tool holder 10 as indicated in Fig. 3 for the first embodiment. Hence, it is indicated in Fig. 3 to apply the strain gauges 52 to the deflection portion - rod 32 - for measuring axial forces. In further embodiments (not shown), the four strain gauges 52 can also be applied below the measuring plate 30 on the surface of the die 16. The strain gauges 52 are electrically connected in a full bridge circuit.

To visualize the signals of the sensors 50, 52 of the first sensing device 18, a dynamic strain meter (not shown) is used for the strain gauges 52 and a resistance measurement device (not shown) is used for the DiaForce® sensor 50.

The sensor 50 is preloaded by the tool tip 14 due to mounting conditions with an axial force, for example with a force of approximately 100 to 500 N.

As explained in more detail in DE 10253178 B4, piezoresistive layers of diamond-like carbon can be affected by the temperature. Since temperature may be different during metal working processes, this could have an effect on the force measurement. Therefore, an advantageous embodiment of the first sensing device 18 has a temperature compensation means. The temperature compensation means may use measuring the temperature and the force via the piezoresistive layer as this is described in detail in DE 10253178 B4. The measured temperature can be used to compensate any temperature effect on the force measurement.

The measurement of the tool holder's lateral forces is very precise and repeatable. The output voltage of the eddy-current displacement sensors 44 - 47 realizes an adequate backward identification of the X- and Y- components of the acting forces in the die 16. It has been verified that a range of acting forces (for example between 1 N and 1000 N) developed during typical ISF processes can be measured with a new kind of integrated sensors in the machining parts.

Figs. 6 and 7 show a further embodiment with an alternative force measurement principle which substitutes the eddy-current displacement sensors 44 - 47 of the second sensing device 20 by an arrangement of four concentrically arranged DiaForce® ring sensors 60 between the two plates 28, 30 of the smart tool holder 10.

This system of four ring sensors 60 having piezoresistive layers of amorphous diamond-like carbon can be used to form both the first and the second sensing devices 18, 20. The axial force will be measured by summing up the signals of all ring sensors 60. The lateral forces can be measured in amount and direction by using the individual signals similar as explained above with reference to the four eddy current displacement sensors 44 - 47.

The four ring sensors 60 are in the form of flat washers. In the embodiment of Figs. 6 and 7, the ring sensors 60 are used together with screw fasteners 62 comprising bolts 63 and nuts 64 that connect the plates 28, 30. Hence, the rod 32 can be omitted.

It is to be noted that in further embodiments (not shown), the second sensing device 20 may include more than four circumferentially spaced apart sensors 1 - 4 for measuring forces or distances between the plates 28, 30 or similar laterally protruding elements. In a further embodiment, only three of the sensors 1 - 4 are used within the second sensing device 20, for example spaced apart by an angle of 60°.

### LIST OF REFERENCE SIGNS

- 1: 1^{st} sensor of the second sensing device
- 2: 2^{nd} sensor of the second sensing device
- 3: 3^{rd} sensor of the second sensing device
- 4: 4^{th} sensor of the second sensing device
- 10: tool holder
- 12: tool
- 14: tip
- 16: die
- 18: first sensing device
- 20: second sensing device
- 22: flange interface (flanged connection part)
- 24: intermediary part
- 28: reference plate (first laterally protruding element)
- 30: measuring plate (second laterally protruding element)
- 32: rod (deflection portion)
- 34: eddy current sensor system
- 36: piezoresistive sensor system
- 38: conus (conical fixing)
- 40: clamping receipt
- 42: milled characteristic
- 44: first eddy current displacement sensor
- 45: second eddy current displacement sensor
- 46: third eddy current displacement sensor
- 47: fourth eddy current displacement sensor
- 50: DiaForce® sensor (piezoresistive layer of amorphous diamond-like carbon)
- 52: strain gauges

- 54: robot
- 60: ring sensors
- 62: screw fasteners
- 63: bolt
- 64: nut
- z: axial direction
- x, y: lateral directions

## Claims

1. Tool holder (10) comprising a first sensing device (18) for detecting an axial force and a second sensing device (20) for detecting a lateral force,
**characterized in that** the second sensing device (20) includes a deflection portion (32) sandwiched between first (28) and second (30) laterally protruding elements having a higher lateral rigidity than the deflection portion (32), and **in that** the second sensing device (20) further includes at least one displacement sensor (44 - 47) for detecting a change in a distance between a laterally protruding portion of the first laterally protruding element (28) and a corresponding laterally protruding portion of the second radially protruding element (30).

2. Tool holder according to claim 1,
**characterized in that** the first sensing device (18) includes a piezoresistive layer (50) extending in a plane crossing the axial direction for measuring the axial force.

3. Tool holder according to claim 2,
**characterized in that** the piezoresistive layer (50) comprises an amorphous diamond-like carbon film.

4. Tool holder according to any of the preceding claims,
**characterized in that** the second sensing device (20) is adapted to detect a mechanical deviation or deflection of the tool holder (10) and/or of the tool in a lateral direction.

5. Tool holder according to any of the preceding claims,
**characterized in that** at least an intermediary part (24) thereof has an axial stiffness in the axial direction (z) being essentially higher than its lateral stiffness in any of its lateral directions (x, y).

6. Tool holder according to any of the preceding claims,
**characterized in that** at least one of the first and the second laterally protruding elements (28, 30) is a disc element or plate element.

7. Tool holder according to claim 6,
**characterized in that** said first and second laterally protruding elements are designed as plates (28, 30) arranged in parallel to each other and, in an unloaded state, perpendicularly to the axial direction.

8. Tool holder according to any of the preceding claims,
**characterized in that** said deflection portion includes a rod (32) extending in the axial direction (z) and having a significantly reduced stiffness and/or diameter when compared to the remaining parts or portions of the tool holder (10).

9. Tool holder according to claim 8,
**characterized in that** said rod (32) interconnects said first and second laterally protruding elements (28, 30) so that they are spaced apart to each other.

10. Tool holder according to any of the preceding claims,
**characterized in that** the second sensing device (20) includes at least three displacement sensors (44 - 47) circumferentially spaced apart from each other for sensing changes in the distances between radially protruding portions of the first and second radially protruding elements (28, 30) at at least three different points circumferentially spaced apart from each other.

11. Tool holder according to any of the preceding claims,
**characterized in that** said at least one displacement sensor includes an eddy current sensor (44 - 47),
a strain gauge,
a capacitive distance sensor,
an inductive distance sensor, and/or
an optical distance or displacement sensor.

12. Tool holder according to any of the preceding claims,
**characterized in that** the second sensing device (20) further includes a plurality of force sensors (60) each for detecting a change in a pushing or pulling force between a laterally protruding portion of the first laterally protruding element (28) and a corresponding laterally protruding portion of the second laterally protruding element (30).

13. Tool holder according to claim 12,
**characterized in that** said plurality of force sensors (1-4) includes at least three circumferentially spaced apart areas of piezoresistive layers (60).

14. Tool holder according to any of the preceding claims,
**characterized in that** it comprises a flanged connection part (22) for connecting the tool holder (10) to a machinery (54) wherein the flanged connection part (22) includes a flange having a plurality of through holes circumferentially spaced apart to each other.

15. Incremental sheet forming method **characterized by** use of a tool holder (10) according to any of the preceding claims for measuring working forces and controlling incremental sheet forming steps in response to the measured working forces.

## Patentansprüche

1. Werkzeughalter (10), umfassend eine erste Sensorvorrichtung (18) zur Erfassung einer axialen Kraft und eine zweite Sensorvorrichtung (20) zur Erfassung einer lateralen Kraft, **dadurch gekennzeichnet, dass** die zweite Sensorvorrichtung (20) einen Biegungsbereich (32) aufweist, der zwischen einem ersten (28) und einem zweiten (30) seitlich vorspringenden Element mit einer höheren lateralen Steifigkeit als der Biegungsbereich (32) aufgenommen ist, und dass die zweite Sensorvorrichtung (20) ferner zumindest einen Verlagerungssensor (44-47) zum Erfassen einer Abstandsänderung zwischen einem seitlich vorspringenden Bereich des ersten seitlich vorspringenden Elements (28) und einem entsprechenden seitlich vorspringenden Bereich des zweiten radial vorspringenden Elements (30) umfasst.

2. Werkzeughalter nach Anspruch 1, **dadurch gekennzeichnet, dass** die erste Sensorvorrichtung (18) eine piezoresistive Schicht (50) die sich in einer Ebene erstreckt, die die axiale Richtung kreuzt zum Messen der axialen Kraft aufweist.

3. Werkzeughalter nach Anspruch 2, **dadurch gekennzeichnet, dass** die piezoelektrische Schicht (50) einen Film aus amorphen diamantähnlichen Kohlenstoff aufweist.

4. Werkzeughalter nach einem der vorhergehenden Ansprüche, **dadurch gekennzeichnet, dass** die zweite Sensorvorrichtung (20) für die Erfassung einer mechanischen Abweichung oder Biegung des Werkzeughalters (10) und/oder des Werkzeugs in einer lateralen Richtung ausgebildet ist.

5. Werkzeughalter nach einem der vorhergehenden Ansprüche, **dadurch gekennzeichnet, dass** zumindest ein Zwischenbereich (24) des Werkzeughalters in der axialen Richtung (z) eine axiale Steifigkeit hat, die wesentlich größer ist als seine laterale Steifigkeit in einer seiner lateralen Richtungen (x, y).

6. Werkzeughalter nach einem der vorhergehenden Ansprüche, **dadurch gekennzeichnet, dass** von dem ersten und dem zweiten seitlich vorspringenden Element (28, 30) zumindest eines ein Scheiben- oder Plattenelement ist.

7. Werkzeughalter nach Anspruch 6, **dadurch gekennzeichnet, dass** das erste und das zweite seitlich vorspringende Element als Platten (28, 30) ausgebildet sind, die parallel zueinander und in einem unbelasteten Zustand senkrecht zur axialen Richtung angeordnet sind.

8. Werkzeughalter nach einem der vorhergehenden Ansprüche, **dadurch gekennzeichnet, dass** der Biegungsbereich einen Stab (32) umfasst, der sich in der axialen Richtung (z) erstreckt und der im Vergleich zu den übrigen Teilen oder Bereichen des Werkzeughalters (10) eine wesentlich geringere Steifigkeit und/oder einen wesentlich geringeren Durchmesser hat.

9. Werkzeughalter nach Anspruch 8, **dadurch gekennzeichnet, dass** der Stab (32) das erste und das zweite seitlich vorspringende Element (28, 30) derart miteinander verbindet, dass die Elemente voneinander beabstandet sind.

10. Werkzeughalter nach einem der vorhergehenden Ansprüche, **dadurch gekennzeichnet, dass** die zweite Sensorvorrichtung (20) wenigstens drei in Umfangsrichtung voneinander beabstandete Verlagerungssensoren (44-47) zur Erfassung von Abstandsänderungen zwischen radial vorspringenden Bereichen des ersten und des zweiten radial vorspringenden Elements (28, 30) an zumindest drei in Umfangsrichtung voneinander beabstandeten Punkten umfasst.

11. Werkzeughalter nach einem der vorhergehenden Ansprüche, **dadurch gekennzeichnet, dass** zumindest ein Verlagerungssensor einen Wirbelstromsensor (44-47), Dehnungsmesser, kapazitiven Abstandssensor, induktiven Abstandsfühler und/oder optischen Abstands- oder Verlagerungssensor umfasst.

12. Werkzeughalter nach einem der vorhergehenden Ansprüche, **dadurch gekennzeichnet, dass** die zweite Sensorvorrichtung (20) ferner eine Mehrzahl von Kraftsensoren (60) umfasst, die jeweils für die Erfassung einer Änderung einer Schub- oder Zugkraft zwischen einem seitlich vorspringenden Bereich des ersten seitlich vorspringenden Elements (28) und einem entsprechenden seitlich vorspringenden Bereich des zweiten seitlich vorspringenden Elements (30) vorgesehen sind.

13. Werkzeughalter nach Anspruch 12, **dadurch gekennzeichnet, dass** die Mehrzahl von Kraftsensoren (1-4) zumindest drei in Umfangsrichtung voneinander beabstandete Bereiche piezoresistiver Schichten (60) umfasst.

14. Werkzeughalter nach einem der vorhergehenden Ansprüche , **dadurch gekennzeichnet, dass** er ein geflanschtes Verbindungsteil (22) für die Verbindung des Werkzeughalters (10) mit einer Maschinenanlage (54) aufweist, wobei das geflanschte Verbindungsteil (22) einen Flansch mit einer Mehrzahl von in Umfangsrichtung voneinander beabstandeten Durchgangsöffnungen hat.

15. Inkrementelles Verfahren zum Formen eines Bleches, **gekennzeichnet durch** die Verwendung eines Werkzeughalters (10) gemäß einem der vorhergehenden Ansprüche, zum Messen von Umformungskräften und zum Steuern der inkrementellen Blechformungsschritte in Reaktion auf die gemessenen Umformungskräfte.

## Revendications

1. Porte-outil (10), comprenant un premier dispositif capteur (18) destiné à détecter une force axiale et un second dispositif capteur (20) destiné à détecter une force latérale, **caractérisé en ce que** le second dispositif capteur (20) comporte une partie de flexion (32) reçue entre un premier (28) et un second (30) élément saillant latéralement et ayant une rigidité latérale supérieure à celle de la partie de flexion (32) et **en ce que** le second dispositif capteur (20) comporte en outre au moins un capteur de déplacement (44-47) pour détecter un changement de l'écart entre une partie saillante latéralement du premier élément saillant latéralement (28) et une partie correspondante saillante latéralement du second élément saillant radialement (30).

2. Porte-outil selon la revendication 1, **caractérisé en ce que** le premier dispositif capteur (18) comporte une couche piézorésistive (50) s'étendant dans un plan croisant la direction axiale, pour mesurer la force axiale.

3. Porte-outil selon la revendication 2, **caractérisé en ce que** la couche piézorésistive (50) comporte un film de carbone amorphe ressemblant au diamant.

4. Porte-outil selon l'une des revendications précédentes, **caractérisé en ce que** le second dispositif capteur (20) est agencé en une direction latérale pour détecter une déviation mécanique ou une flexion du porte-outil (10) et/ou de l'outil.

5. Porte-outil selon l'une des revendications précédentes, **caractérisé en ce qu'**une partie intermédiaire (24) du porte-outil a une rigidité axiale dans la direction axiale (z) qui est sensiblement plus élevée que sa rigidité latérale dans une de ses directions latérales (x, y).

6. Porte-outil selon l'une des revendications précédentes, **caractérisé en ce que** l'un au moins des premier et second éléments saillant latéralement (28, 30) est un élément en forme de disque ou un élément en forme de plaque.

7. Porte-outil selon la revendication 6, **caractérisé en ce que** les premier et second éléments saillant latéralement sont configurés en plaques (28, 30) arrangées parallèlement l'une par rapport à l'autre, et sont agencés perpendiculairement par rapport à la direction axiale dans une condition non chargée.

8. Porte-outil selon l'une des revendications précédentes, **caractérisé en ce que** la partie de flexion comporte un bâton (32) qui s'étend dans la direction axiale (z) et qui a une rigidité et/ou un diamètre sensiblement réduit en comparaison avec les pièces ou parties résiduelles du porte-outil (10).

9. Porte-outil selon la revendication 8, **caractérisé en ce que** le bâton (32) relie les premier et second éléments saillant latéralement (28, 30) de façon que ceux-ci sont écartés l'un de l'autre.

10. Porte-outil selon l'une des revendications précédentes, **caractérisé en ce que** le second dispositif de capteur (20) comporte au moins trois capteurs de déplacement (44-47) circonférentiellement écartés l'un de l'autre et destinés à détecter des changements d'écart entre parties saillant radialement des premier et second éléments saillant radialement (28, 30) à au moins trois points différents circonférentiellement écartés l'un de l'autre.

11. Porte-outil selon l'une des revendications précédentes, **caractérisé en ce qu'**au moins un capteur de déplacement comporte un capteur à courant de Foucault (44-47), un dilatomètre, un capteur capacitif de distance, un capteur inductif de distance et/ou un capteur optique de distance ou de déplacement.

12. Porte-outil selon l'une des revendications précédentes, **caractérisé en ce que** le second dispositif capteur (20) comporte en outre une pluralité de capteurs de force (60), respectivement destinés à détecter un changement d'un effort de cisaillement ou d'un effort de traction entre une partie saillante latéralement de côté du premier élément saillant latéralement (28) et une partie correspondante saillant latéralement de côté du second élément saillant latéralement (30).

13. Porte-outil selon la revendication 12, **caractérisé en ce que** la pluralité de capteurs de force (1-4) comporte au moins trois zones de couches piézorésistives (60) circonférentiellement écartées les unes des autres.

14. Porte-outil selon l'une des revendications précédentes, **caractérisé en ce qu'**il comporte une pièce de raccord à bride (22) destinée à raccorder le porte-outil (10) à une installation de machines (54), la pièce de raccord à bride (22) comportant un bride ayant une pluralité de trous de passage circonférentiellement écartés les unes des autres.

15. Procédé incrémentiel de formation de tôle, **caractérisé par** l'emploi d'un porte-outil (10) selon l'une des revendications précédentes, pour mesurer des forces de déformation et pour commander des étapes incrémentielles de formation de tôle en réponse aux forces de déformation mesurées.
